Europäisches Patentamt

European Patent Office

Office européen des brevets

(11) Veröffentlichungsnummer: **0 292 855 B1**

# (12) EUROPÄISCHE PATENTSCHRIFT

(45) Veröffentlichungstag der Patentschrift: **04.03.92**

(21) Anmeldenummer: **88107977.6**

(22) Anmeldetag: **18.05.88**

(51) Int. Cl.⁵: **G01B 5/255**, G01M 17/00

(54) Verfahren und Einrichtung zum Kontrollieren und Einstellen von Fahrwerken von Kraftfahrzeugen.

(30) Priorität: **20.05.87 HU 224487**

(43) Veröffentlichungstag der Anmeldung:
**30.11.88 Patentblatt 88/48**

(45) Bekanntmachung des Hinweises auf die
Patenterteilung:
**04.03.92 Patentblatt 92/10**

(84) Benannte Vertragsstaaten:
**AT DE FR GB IT NL SE**

(56) Entgegenhaltungen:
**EP-A- 0 124 258**
**EP-A- 0 199 913**
**DE-A- 3 040 355**
**FR-A- 2 263 500**
**GB-A- 2 094 988**

**PATENT ABSTRACTS OF JAPAN, Band 9, Nr.
334 (P-417)[2057], 27. dezember 1985 & JP - A
- 60 159 629 (MAZDA K.K.) 21.08.1985**

(73) Patentinhaber: **GEPJARMU JAVITO KISSZO-
VETKEZET**
**Temesvari u. 4**
**H-2315 Szigethalom(HU)**

(72) Erfinder: **Németh, István**
**Temesvari u.4**
**H-2315 Szigethalom(HU)**
Erfinder: **Simon, Béla, Dipl.-Ing.**
**Molnár szigeti u.8**
**H-1208 Budapest(HU)**
Erfinder: **Németh, István, Jun.**
**Nap u.21**
**H-2315 Szigethalom(HU)**

(74) Vertreter: **Patentanwälte Viering & Jentschura**
**Steinsdorfstrasse 6 Postfach 22 14 43**
**W-8000 München 22(DE)**

EP 0 292 855 B1

## Beschreibung

Die Erfindung bezieht sich auf ein Verfahren und eine Einrichtung, mit welcher die Einstellungsfehler bei jedem Fahrwerk von Kraftfahrzeugen festgestellt und korrigiert werden können.

Es ist bekannt, daß die Verkehrssicherheit der Kraftfahrzeuge, die Lebensdauer der Reifen, durch die richtige Einstellung der vorderen Fahrwerke bedeutend beeinflußt sind. Aus diesem Grund werden bei dem vorderen Fahrwerk die Spreizung, der Nachlauf, die Vorspur, der Radsturz und das Lenkungsspiel nicht nur bei der Herstellung, sondern im Leben des Kraftfahrzeuges mehrmals, regelmäßig kontrolliert (Die Spreizung und der Radsturz müssen nur bei unabhängiger Radaufhängung kontrolliert werden.) Zur Durchführung dieser Aufgabe wurden zahlreiche kraftfahrzeugdiagnostische Einrichtungen entwickelt. Ein Teil dieser Einrichtungen beruht auf dem unmittelbaren Meßprinzip, ein größerer Teil aber auf einem indirekten Meßprinzip.

Auf dem unmittelbaren Meßprinzip beruht diejenige Meßeinrichtung, bei der an den gelenkten Rädern ein mit einem Gestänge versehenes Meßgerät befestigt ist, wie dies in der DE-B-2 935 899 beschrieben ist. Bei dieser Lösung werden die Fehler mittels des Gestänges vergrößert und über am Gestänge anmontierte Fühler in elektrische Signale umgewandelt. Obwohl dieses Meßgerät absolut genau ist, wurde es nicht verbreitet verwendet, weil sowohl seine Ausbildung als auch seine Verwendung außerordentlich kompliziert sind.

Eine ähnliche Lösung ist in der HU-A-177 659 beschrieben. Auch hier muß das Meßgerät am zu kontrollierenden Rad anmontiert werden, aber zwecks Messung der zum Lenken nötigen Kraft ist auch ein mit einem Dynamometer versehenes Meßlenkrad anstatt des ordnungsgemäßen Lenkrades anmontiert. Nicht einmal diese Lösung wurde verbreitet angewendet.

Aus dem oben beschriebenen Grund sind die auf einem indirekten Meßprinzip basierenden Systeme weiter verbreitet. Diese werden auch deshalb bevorzugt, weil die Einrichtungen dieser Art mit den auch die anderen Merkmale des Kraftfahrzeuges kontrollierenden komplexen diagnostischen Einrichtungen gut kombinierbar sind. Derartige komplexe Einrichtungen sind in der GB-A-2 094 988 oder in der DE-B-28 01 855 beschrieben. Bei diesen Lösungen werden die vorderen Räder auf je einen Drehschemel und die hinteren Räder auf je ein Rollenpaar gestellt. Am Drehschemel kann das Lenkungsspiel und an den Rollen können die Bremse, die Geschwindigkeit und die Beschleunigungsfähigkeit gemessen werden. Die komplexe Einrichtung ist auch mit einer dritten Meßstelle versehen, an der der Seitenschlupf gemessen wird.

Der in der DE-B-27 37 661 beschriebene Drehschemel dient der genaueren Messung der Lenkvorrichtung. Bei dieser Lösung wird das Rad nicht auf eine flache geriffelte Platte, sondern in eine Wiege gestellt. Der Erhöhung der Meßgenauigkeit dient die in der DE-B-28 01 855 beschriebene Meßplattenausbildung. Deren Wesen besteht darin, daß die Meßplatte auf mehreren, mittels einer Feder unterstützten Kugeln angeordnet ist.

Eine andere Konstruktionstendenz wird durch die EP-A-124 258 repräsentiert. Bei dieser Lösung sind auch die vorderen Rädern auf ein Rollenpaar gestellt. Dies hat den Vorteil, daß über die geometrischen Merkmale hinaus auch die Bremswirkung gemessen werden kann. Zur tatsächlichen Messung ist zwischen den beiden Rollen noch eine dritte Rolle angeordnet und aus der seitlichen Bewegung dieser dritten Rolle wird auf die Fehler gefolgert. Auch die Abstützrollen können axial bewegt werden, woraus z.B. auf die Fehler des Lenkgestänges gefolgert werden kann.

Obwohl die oben angegebenen Lösungen die Fehler des vorderen Fahrwerkes mit meht oder weniger Genauigkeit zeigen können, können sie dennoch nicht als befriedigend betrachtet werden. Der Grund dafür liegt darin, daß an den Fahrwerken auch solche Fehler auftreten, die bisher nicht gemessen wurden.

So z.B. wird das hintere Fahrwerk aus diesem Gesichtspunkt nicht kontrolliert, obwohl die im Vergleich zur Längsachse des Kraftfahrzeuges gemessenen Vertikalfehler, die Spurfolgefehler und die Koaxialfehler der Radwellen die Verkehrssicherheit des Kraftfahrzeuges und die Lebensdauer der Gummireifen ebenso beeinflussen wie die an den vorderen Fahrwerken. Ähnliche, bisher nicht kontrollierte Fehler können auch an den vorderen Fahrwerken auftreten. Insbesondere wichtig ist dies bei solchen Kraftfahrzeugen, bei denen die Geometrie der Fahrwerke nur von Schwenkarmen bestimmt wird. Dies gilt z.B. bei Autobussen mit Luftfedern.

Zielsetzung der Erfindung ist es, ein Verfahren und eine Einrichtung zu schaffen, mit deren Hilfe jeder Aufhängungsfehler jedes Fahrwerkes gemessen und beseitigt werden kann.

Das Ziel kann dadurch erreicht werden, daß jedes Rad des Kraftfahrzeuges auf Meßrollen gestellt und die Fahrwerke während des Drehens der Rollen durchgemessen und ggf. eingestellt werden.

Durch Einspeisung der Daten des Kraftfahrzeuges in eine Rechenanlage kann die Einstellung genau berechnet werden, so daß auch die Wechselwirkung der verschiedenen Parameter berücksichtigt werden kann.

Die Erfindung bezieht sich also auf ein Verfahren zum Kontrollieren und ggf. zum Einstellen der Position der Fahrwerke, insbesondere mittels Schwenkarm (Panhard-Stange) aufgehängter Fahrwerke, von Kraftfahrzeugen im Vergleich zum Kraftfahrzeug, wobei jedes Rad des Kraftfahrzeuges gleichzeitig auf je ein derartiges Rollenpaar gestellt wird, bei welchem die Achsen der Rollen senktrcht zur Längsachse des in idealer Lage befindlichen Kraftfahrzeuges verlaufen, wobei die rechts- und linksseitigen Rollen koaxial sind. Von jedem Rollenpaar wird mindestens eine Rolle mit Hilfe einer äußeren Kraftquelle gedreht. Mindestens eine Rolle der Rollenpaare und das Kraftfahrzeug werden an wenigstens zwei Stellen entlang der Längsachse des Kraftfahrzeugs, vorteilhaft in der Achsenlinie der Fahrwerke, seitlich abgestützt und die Größe und Richtung der in der axialen Abstützung der Rollen und/oder in der seitlichen Abstützung des Kraftfahrzeuges auftretenden Stützkräfte werden gemessen und ggf. werden diese Abstützkräfte durch Verstellen der die Fahrwerke aufhängenden einstellbaren Elemente auf Null reduziert. Weiterhin wird der von der Längsachse des Kraftfahrzeuges und den Achsen der Rollen eingeschlossene Winkel gemessen und wird die Position des Halbierungspunktes der Spurbreite der Räder relativ zu der Längsachse des Kraftfahrzeuges gemessen. Schließlich werden ggf. durch Verstellen der die Fahrwerke aufhängenden eubstellbaren Elemente eine zwischen der Längsachse des Kraftfahrzeuges und dem Halbierungspunkt der Spurbreite der Rädar existierende Differenz beseitigt und der von der Längsachse des Kraftfahrzeuges und den Achsen der Rollen eingeschlossene Winkel auf 90° eingestellt.

Bei einer vorteilhaften Ausgestaltung des erfindungsgemäßen Verfahrens wird die Messung und ggf. die Einstellung jedes Fahrwerkes durchgeführt, dann werden die Größe und die Richtung der in der axialen Abstützung der Rollen unter den gelenkten Räder auftretenden Abstützkräfte gemessen und die Abstützkräfte werden durch Verstellen der die Position der gelenkten Räder bestimmenden Elemente auf Null reduziert.

Bei einer weiteren vorteilhaften Ausgestaltung des erfindungsgemäßen Verfahrens wird jedes Rad von über mehr als zwei Achsen verfügenden Kraftfahrzeugen, insbesondere von Gelenkfahrzeugen, auf je ein Rollenpaar gestellt, wonach das Durchmessen und ggf. das Einstellen der Position der Fahrwerke von der vorderen Achse aus fortschreitend je Achse durchgeführt wird. Im Falle von Gelenkfahrzeugen wird das Bestimmen und ggf. das Einstellen der Position der vorderen gelenkten Räder während der Messung und ggf. das Einstellen der Fahrwerke vor dem Gelenk durchgeführt, danach wird hinter dem Gelenk weiter fortschreitend das Messen und ggf. Einstellen der Position der Fahrwerke je Achse durchgeführt, schließlich werden ggf. das Bestimmen und Einstellen der Position von glenkten Rädern hinter dem Gelenk und das Einstellen des Lenkgestänges der vorderen gelenkten Räder und der gelenkten Räder hinter dem Gelenk durchgeführt.

Bei einer dritten vorteilhaften Ausgestaltung des erfindungsgemäßen Verfahrens wird das Lenkrad des auf die Rollen gestellten Kraftfahrzeuges so lange gedreht, bis die Abstützkraft in der axialen Abstützung der Rollen unterhalb der gelenkten Fahrwerke von Null abweicht, wonach die Winkelstellung des Lenkrades gemessen wird.

Bei einer vierten vorteilhaften Ausgestaltung des erfindungsgemäßen Verfahrens wird der Winkel zwischen der als Basis der Positon des Zwischenlenkhebels dienenden horizontalen oder vertikalen Ebene des Fahrwerkes und der Horizontalen gemessen, wobei dieser Winkel gegenüber der Horizontalen auf dem Wert von 0° bzw. 90° gehalten wird.

Bei einer fünften vorteilhaften Ausgestaltung des erfindungsgemäßen Verfahrens werden die Räder des Kraftfahrzeuges auf derartige Rollenpaare gestellt, deren Achsen senkrecht zur Längsachse des in idealer Position befindlichen Kraftfahrzeuges ist, die Position des Halbierungspunktes der Spurbreite der Räder relativ zu der Längsachse des Kraftfahrzeuges wird festgestellt und ggf. wird die zwischen ihnen bestehende Differenz durch Verstellen der die Fahrwerke aufhängenden einstellbaren Elemente beseitigt. Dann werden die auf die Rollenpaare in Axialrichtung und dazu senkrechter Richtung wirkenden Kräfte gemessen und ggf. werden diese Kräfte durch Verstellen der die Fahrwerke aufhängenden einstellbaren Elemente beseitigt.

Schließlich werden bei einer vorteilhaften Ausgestaltung des erfindungsgemäßen Verfahrens die Abmessungs- und Toleranzdaten der Fahrwerke verschiedener Kraftfahrzeuge in einem Computer gespeichert, die gemessenen Daten mit den gespeicherten Daten des gegebenen Kraftfahrzeuges mit Hilfe des Computers verglichen, die Fahrwerke mit Hilfe des Computers bewertet und ggf. das erforderliche Maß der Verstellung der einstellbaren Elemente bestimmt.

Die Erfindung bezieht sich auch auf eine Einrichtung, die zum Bestimmen der Position der Fahrwerke, insbesondere der mittels Schwenkarm (Panhard-Stange) aufgehängten Fahrwerke, von Kraftfahrzeugen relativ zum Kraftfahrzeug und zum Einstellen der gelenkten Räder geeignet ist.

Die erfindungsgemäße Einrichtung weist mindestens so viele aus Rollen gleichen Durchmessers bestehende Rollenpaare auf, wie das gegebene Kraftfahrzeug zu kontrollierende Räder hat. Die Achse jeder Rolle ist in eine horizontale Ebene und senkrecht zur idealen Längsachse des zu kontrollierenden Kraftfahrzeuges ausgerichtet, wobei die rechts- und linksseitigen Rollen koaxial aufeinander ausgerichtet sind. Im Rollenpaar ist der Abstand zwischen den Rollen kleiner als der Durchmesser des zu kontrollierende Rades. Die Rollenpaare sind in Schemeln gelagert, die mit eine freie Bewegung sicherstellender Abstützung an einem Maschinenbett angeordnet sind. Die die vorderen Fahrwerke tragenden Schemel sind mindestens zu einer quergerichteten Bewegung zwischen zur Längsachse senkrechten quergerichteten Führungen fähig. Von den die anderen Fahrwerke abstützenden Schemeln sind die die zur gleichen Kraftfahrzeugachse gehörenden Fahrwerke tragenden Schemel bevorzugt aneinander befestigt und/oder verfügen über einen Freiheitsgrad in Längsrichtung zwischen längsgerichteten Führungen. Von jedem Rollenpaar steht mindestens eine Rolle mit je einem mit der gleichen Drehzahl betätigbaren Getriebe in angetriebener Verbindung. Die die vorderen Fahrwerke tragenden Schemel und ggf. auch die anderen Schemel sind mindestens in Richtung der Rollenachsen an dem Maschinenbett abgestützt; zwischen dieser seitlichen Abstützung und dem Schemel sind auf Krafteinwirkung ein Signal erzeugende Elemente angeordnet. In der Achslinie der Fahrwerke sind die Räder von innen oder außen berührende Stützrollen angeordnet, die relativ zum Maschinenbett in Querrichtung verstellbar und feststellbar sind, wobei in den Feststellelementen auf Krafteinwirkung Signale erzeugende Elemente angeordnet sind, die mit je einem Anzeigegerät und/oder einem Computer verbunden sind.

Die Erfindung wird nachstehend anhand von Ausführungsbeispielen mit Hilfe der Zeichnung näher erläutert. Es zeigt

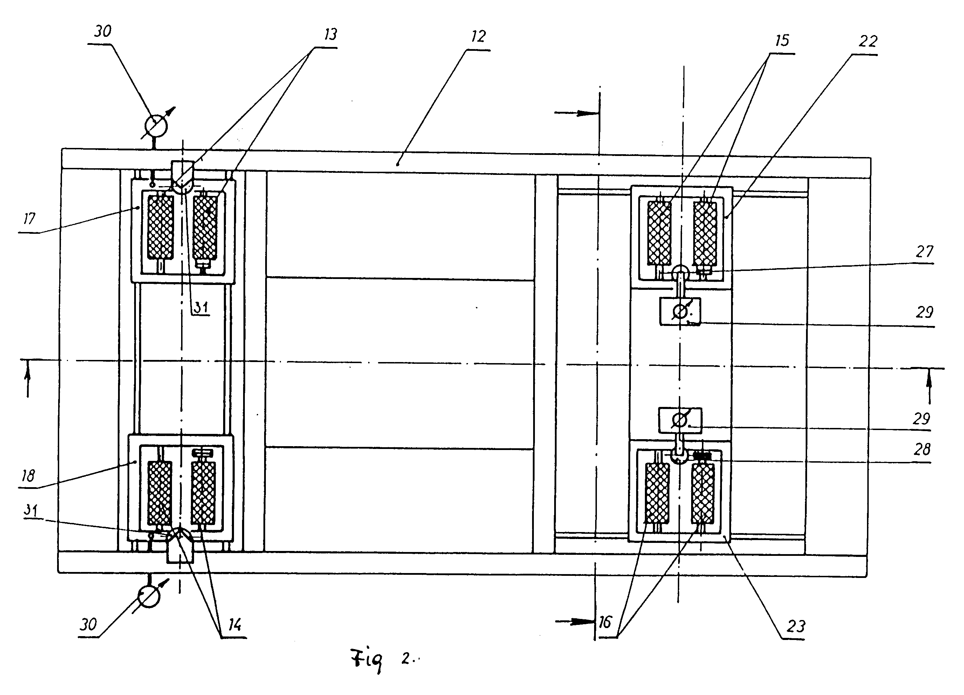

Fig. 1
die Aufhängung der Fahrwerke eines Autobusses,
Fig. 2
die erfindungsgemäße Einrichtung in der Draufsicht,
Fig. 3 und Fig. 4
die erfindungsgemäße Einrichtung im Schnitt gemäß der Schnittlinie in Fig. 2,
Fig. 5
die Draufsicht auf eine Variante der Einrichtung für Gelenkbusse.

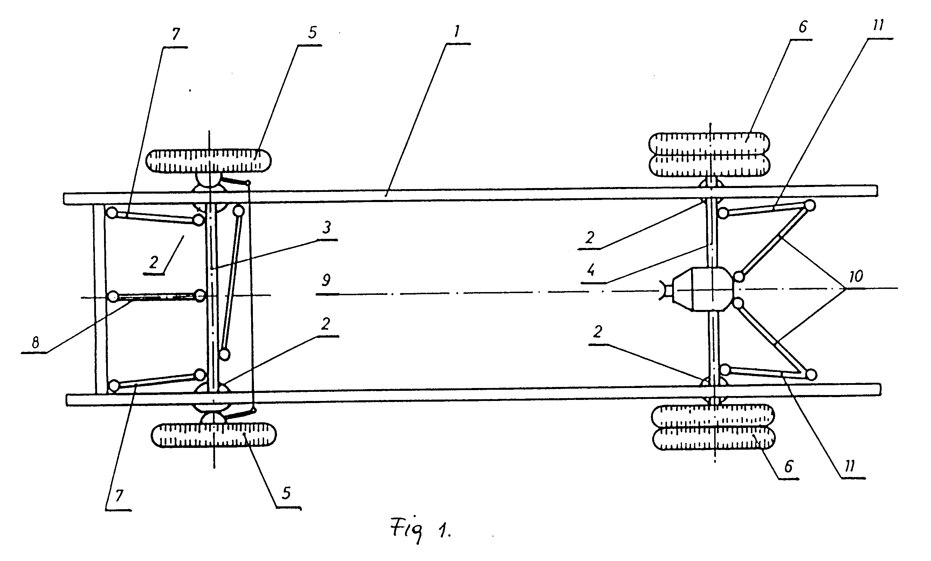

Das erfindungsgemäße Verfahren wird zuerst im Zusammenhang mit zweiachsigen Autobussen beschrieben. Die Achsenanordnung des Autobusses ist in Fig. 1 dargestellt. Ein Karosseriegestellt 1 ist über Luftfedern 2 auf einer Vorderachse 3 und einer Hinterachse 4 abgestützt, die über mit Kugelgelenk gelagerten Schwenkarmen (Panhard-Stangen) am Gestell 1 aufgehängt sind. Die Vorderachse 3 wird in der Ebene unterhalb der Achsenlinie der vorderen Räder 5 von zwei Schwenkarmen 7, und in der Ebene oberhalb der Achsenlinie von einem Schwenkarm 8 gehalten, wobei die Schwenkarme 7,8 zu der Längsachse des Gestells wenigstens annähernd parallel sind. Darüber hinaus ist die Vorderachse 3 über einen Schwenkarm 9 auch in Seitenrichtung am Gestell 1 aufgehängt. Die Hinterachse 4 wird sowohl in der Ebene unterhalb als auch oberhalb der Achsenlinie der hinteren Räder 6 von je zwei Schwenkarmen 10 bzw. 11 gehalten. Die in der oberen Ebene angeordneten Schwenkarme 11 sind wenigstens annähernd parallel zu der Längsachse des Gestells 1, wohingegen die in der unteren Ebene angeordneten Schwenkarme 10 von der Mitte der Hinterachse 4 schräg in Richtung zu den Längsträgern des Gestellts 1 hin ausgerichtet sind. Die Länge jedes Schwenkarmes kann mittels einer Verstellschraube eingestellt werden.

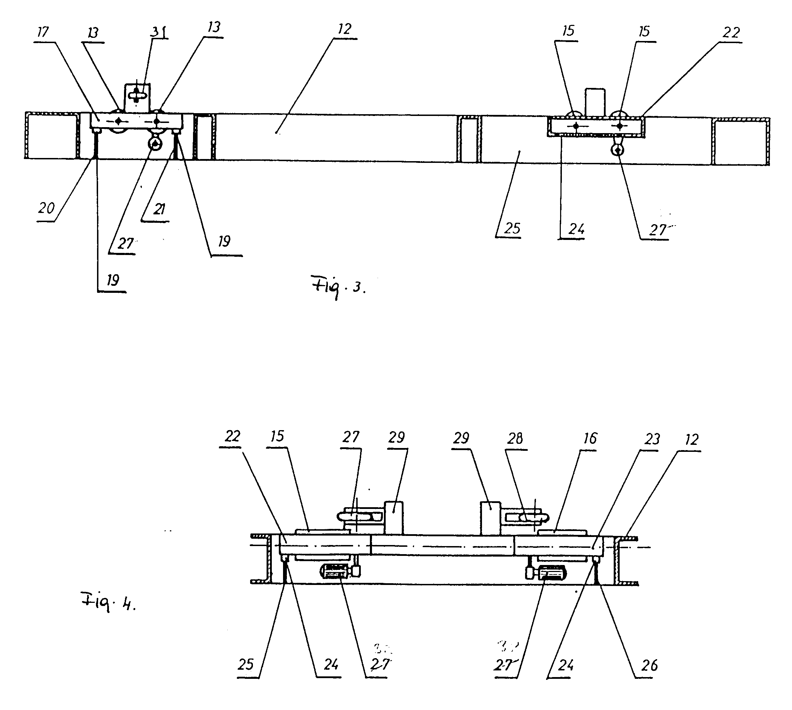

Der Durchführung des erfindungsgemäßen Verfahrens dient die in den Figuren 2 bis 4 dargestellte Einrichtung.

In einem aus starken Stahlträgern bestehenden Rahmen 12 sind vier Paare 13-16 aus Rollen mit horizontalen Achsen angeordnet. Die Position dieser Rollenpaare entspricht im wesentlichen der Position der vorderen Räder 5 und der hinteren Räder 6 des zu kontrollierenden Autobusses. Die Achsen der hinteren bzw. vorderen Rollen der zu beiden Seiten der Längsachse des Rahmens 12 angeordneten Rollenpaare 13 und 14 bzw. 15 und 16 fallen jeweils in eine Linie und verlaufen senkrecht zur Längsachse des Rahmens 12.

Die die vorderen Räder 5 abstützenden Rollenpaare 13 und 14 sind gesondert in je einem Schemel 17 und 18 gelagert. Die Schemel 17 und 18 stehen über eine Rollenreihe 19 geringen Reibungswiderstandes und großer Tragfähigkeit auf im Rahmen 12 ausgebildeten Schienen 20 und 21. Die Schienen 20 und 21 verlaufen senkrecht zur Längsachse des Rahmens 12.

Auch die die hinteren Räder 6 abstützenden Rollenpaare 15 und 16 sind in je einem Schemel 22 und 23 angeordnet, diese sind aber steif miteinander verbunden und stützen sich über eine Rollenreihe 24 geringen Reibungswiderstandes und großer Tragfähigkeit an im Rahmen 12 ausgebildeten Schienen 25 und 26 ab. Die Schienen 25 und 26 sind parallel zu der Längsachse des Rahmens 12.

Der Abstand zwischen den Rollen der Rollenpaare ist - in bekannter Weise - kleiner als der Durchmesser des vorderen Rades 5 und des hinteren Rades 6 des zu kontrollierenden Autobusse. Von jedem Rollenpaar kann die eine Rolle über einen Keilriemenantrieb und einen Elektromotor 32 gedreht werden.

An den Schemeln 22 und 23 sind zwischen den Rollenpaaren 15 und 16 in der Halbierungsebene zwischen ihren Achsen je eine Meßrolle 27 und 28 mit vertikaler Achse angeordnet. Die Meßrollen 27 und 28 sind an je einem Meßgerät 29 mit in horizontaler Ebene beweglichem Arm gelagert. Im Meßgerät 29 wird die auf die Meßrollen 27 bzw. 28 einwirkende Kraft gemessen bzw. werden zu der Kraft proportionale elektrische Signale erzeugt.

Die Schemel 17 und 18 sind in Achrichtung der Rollenpaare 13 bzw. 14 über je ein Kraftmeßgerät 30 am Rahmen 12 abgestützt.

In der Halbierungsebene zwischen den Achsen der Rollenpaare 13 und 14 sind am Rahmen 12 Stützrollen 31 mit vertikaler Achse angeordnet, die zur Längsachse des Rahmens senkrecht verstellbar und feststellbar sind.

Mit Hilfe der oben beschriebenen Einrichtung wird das Einstellen der Fahrwerke des Autobusses wie folgt durchgeführt.

Die vorderen Räder 5 werden auf die Rollenpaare 13 und 14, die hinteren Räder 6 auf die Rollenpaare 15 und 16 gestellt. Es wird kontrolliert, ob der Reifendruck den vorgeschriebenen Wert hat und nötigenfalls wird der Druck nachgestellt. Mit Hilfe der Stützrollen 31 wird die Außenseite der Reifen der vorderen Räder 5, und mit Hilfe der Meßrollen 27 und 28 wird die Innenseite der Reifen der hinteren Räder 6 abgestützt.

Über den Elektromotor 32 werden die damit in Verbindung stehenden Rollen, und von diesen Rollen die vorderen Räder 5 und die hinteren Räder 6 gedreht. Die Drehzahl wird derart gewählt, daß der Autobus mit einer Geschwindigkeit von 25 km/h fährt.

Wenn die Fahrwerke richtig eingestellt sind, werden weder die Meßrollen 27 und 28, noch das Kraftmeßgerät 30 seitliche Auslenkkräfte anzeigen.

Wenn die Richtung der Achse der Fahrwerke nicht senkrecht zur Längsachse des Rahmens 12 ist, will die Hinterachse 4 gegenüber dem Rahmen 12 auswandern und die Vorderachse 3 die Schemel 17 und 18 auslenken. In diesem Fall wird die Länge der Schwenkarme solange geändert,bis die seitlichen Kräfte beseitigt sind.

Danach wird kontrolliert, ob die Achsen der Fahrwerke zur Längsachse des Karosseriegestells 1 senkrecht stehen. Da die Darstellung dieser Achse kompliziert wäre, wird dies auf indirekte Weise durchgeführt. Nachdem die Achsen der Rollenpaare 13-16 senkrecht zur Längsachse des Rahmens 12 sind, wird die Position des Karosseriegestells 1 und des Rahmens 12 relativ zueinander über eine einfache Längenmessung gemessen, wozu deren entsprechenden Punkte als Basis verwendet werden. Nötigenfalls wird durch Veränderung der Länge der Schwenkarme auch dieser Wert eingestellt.

Schließlich wird in der gleichen Weise wie oben beschrieben im wesentlichen mit der vorangehend beschriebenen Messung gleichzeitig kontrolliert, ob die Längsachse des Gestells 1 und der Halbierungspunkt der Spurbreite der Räder zusammenfallen.

Durch Veränderung der Einstellung der Schwenkarme kann auch dieser Wert eingestellt werden.

Bei zweiachsigen Kraftfahrzeugen ist es zweckmäßig, das Korrigieren der Fehler jeweils bei dem Fahrwerk zu beginnen, an dem der Fehler größer ist.

Nachdem die Position der Fahrwerke relativ zum Gestell eingestellt wurde, wird die Einstellung der gelenkten vorderen Räder 5 kontrolliert. Dazu werden mit Hilfe der Kraftmeßgeräte 30 die an den Rollenpaaren 13 und 14 auftretenden Seitenkräfte gesondert gemessen. Wenn die beiden Kraftmeßgeräte 30 eine Abweichung zeigen, wird die Lenkgeometrie nachgestellt.

Danach wird das Spiel der Lenkvorrichtung kontrolliert. Hierbei wird das Lenkrad solange gedreht, bis die Axialkraft an den Rollenpaaren 13 und 14 unterhalb der gelenten Vorderachse 3 von Null abweicht. Wenn die Kraftmeßgeräte 30 eine Kraftwirkung anzeigen, wird die Winkelstellung des Lenkrades gemessen.

Schließlich wird der Nachlaufwinkel kontrolliert. Da bei dem dargestellten Autobus die gelenkten Fahrwerke in einer einzigen Vorderachse 3 zusammengebaut sind, kann der Nachlaufwinkel durch Verdrehen der Vorderachse 3 korrigiert werden. Aus diesem Grund ist es genügend, den von der Herstellungsbasisebene der Vorderachse 3 und der Horizontalen eingeschlossenen Winkel zu messen. Wenn der gemessene Winkel vom Vorgeschriebenen abweicht, kann der Winkel durch Veränderung der Länge des Schwenkarmes 8 eingestellt werden.

Die oben beschriebene Einrichtung wurde auch mit einem Computer ergänzt, in dem alle Daten bezüglich Länge und Winkellage der Schwenkarme eingespeist wurden. Auch die Zusammenhänge zwischen den Fahrwerkfehlern und der Position der Schwenkarme waren in dem Computer eingespeichert. Nach Einspeisung der Daten der Meßrollen 27 und 28 und des Kraftmeßgerätes 30 wird am Bildschirm des Computers das Maß der Einstellung jedes Schwenkarmes angezeigt.

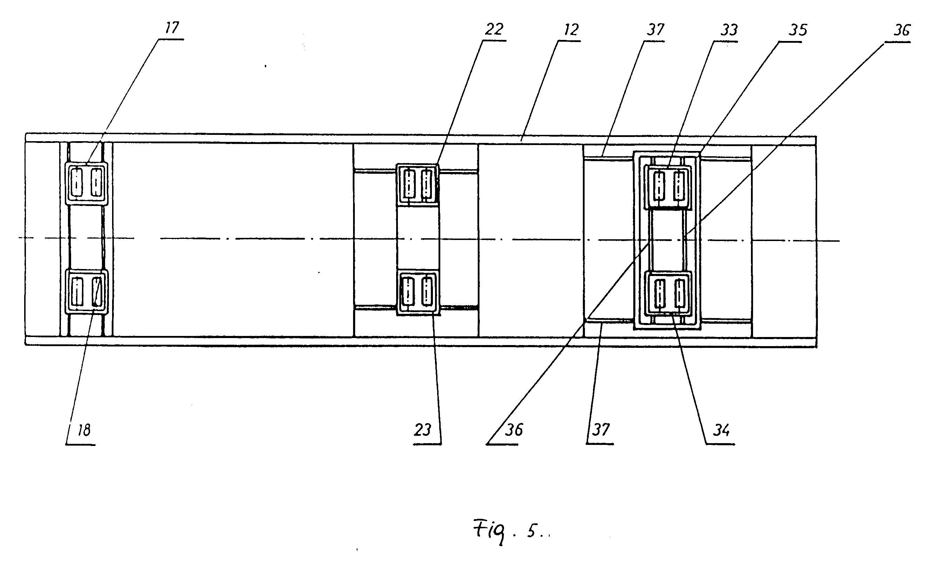

Das erfindungsgemäße Verfahren kann auch bei Gellenkbussen verwendet werden. Hierzu ist eine Einrichtung erforderlich, die auch über eine Meßstelle für die dritte Achse verfügt. Eine derartige Einrichtung ist in Fig. 5 dargestellt. Es ist ersichtlich, daß über die Schemel 17, 18, 22 und 23 hinaus auch Schemel 33 und 34 angeordnet sind, die auf Schienen 36 senkrecht zur Längsachse des Rahmens 12 bewegbar sind. Die Schienen 36 sind an einem Wagen 35 befestigt, der auf Schienen 37 parallel zur Längsachse des Rahmens 12 bewegbar ist.

Mit dieser Einrichtung kann von der Vorderachse ausgehend die Einstellung jedes Fahrwerkes in der oben beschriebenen Weise durchgeführt werden.

Die erfindungsgemäße Einrichtung kann auch derart gebaut werden, daß jeder Schemel in der Ebene in zwei Richtungen bewegbar ist und die den Schemel auslenkende Kraft sowohl in Längsrichtung als auch in Querrichtung gemessen werden kann. Hierzu ist es zweckmäßig, die Schemel statt über die oben beschriebene Abstützung mit Rollenreihe über flexible Elemente, z.B. mittels hochfester dünnen Drähte am Rahmen aufzuhängen. Selbstverständlich soll die dem Achsenabstand der verschiedenen Kraftfahrzeuge entsprechende Verstellmöglichkeit vorgesehen werden.

Mit der derart gebauten Einrichtung kann auch das Verfahren in leichterer Weise durchgeführt werden. Hierbei sollen zuerst die Fehler zwischen der Längsachse des Gestells und dem Halbierungspunkt der Spurbreite der Fahrwerke beseitigt werden, dann soll die Längsachse des Gestells auf die Längsachse der Einrichtung ausgerichtet werden und im weiteren kann das Einstellen aufgrund der Daten der Kraftmeßgeräte durchgeführt werden.

Aus den oben beschriebenen Ausführungsbeispielen ist derjenige qualitative Unterschied gut zu erkennen, der zwischen dem erfindungsgemäßen Verfahren und den bisherigen Methoden besteht. Es ist ersichtlich, daß bei dem erfindungsgemäßen Verfahren die tatsächliche Verbindung zwischen den Rädern und dem Boden kontrolliert wird, wohingegen bei den traditionellen Verfahren vorgeschriebene geometrische Abmessungen kontrolliert wurden, die als Basis für eine vermutliche Spurtreue des Kraftfahrzeugs und eine vermutlich verschleißfreie Belastung der Reifen angesehen wurden.

Selbstverständlich ist der Fehler jedwelchen Radaufhängungssystems mit dem erfindungsgemäßen Verfahren feststellbar, aber das Korrigieren des Fehlers soll dem gegebenen Aufhängungssystem entsprechend durchgeführt werden.

## Patentansprüche

1. Verfahren zum Kontrollieren und gegebenenfalls Einstellen der Lage der Fahrwerke, insbesondere von mittels Schwenkarm (Panhard-Stange) aufgehängten Fahrwerken, von Kraftfahrzeugen relativ zur Kraftfahrzeugkarosserie, dadurch gekennzeichnet, daß jedes Rad des Kraftfahrzeuges gleichzeitig auf je ein Rollenpaar (13-16) gestellt wird, deren Achsen senkrecht zur Längsachse des in idealer Lage befindlichen Kraftfahrzeuges sind, wobei die rechts- und linksseitigen Rollen achsgleich sind, daß von jedem Rollenpaar mindestens die eine Rolle mit Hilfe eines äußeren Antriebs (32) gedreht wird, und mindestens die eine Rolle der Rollenpaare (13-16) und das Kraftfahrzeug an mindestens zwei Stellen vorzugsweise in der Achsenlinie der Fahrwerke seitlich abgestützt werden (27, 28, 31), daß die Größe und Richtung der in der axialen Abstützung der Rollen und/oder in der seitlichen Abstützung des Kraftfahrzeuges auftretenden Abstützkräfte gemessen werden und gegebenenfalls die Abstützkräfte durch Verstellen der die Fahrwerke aufhängenden verstellbaren Elemente (7-11) auf Null reduziert werden, daß der von der Längsachse des Kraftfahrzeuges und den Achsen der Rollen eingeschlossene Winkel gemessen und die Position des Halbierungspunktes der Spurbreite der Räder relativ zu der Längsachse des Kraftfahrzeuges bestimmt werden, und daß durch Verstellen der die Fahrwerke aufhängenden verstellbaren Elemente (7-11) ein zwischen der Längsachse des Kraftfahrzeuges und dem Halbierungspunkt der Spurbreite der Räder gegebenenfalls bestehender Unterschied beseitigt wird und der von der Längsachse des Fahrzeugs und den Achsen der Rollen eingeschlossene Winkel auf 90° eingestellt wird, falls dieser Winkel von 90° abweicht.

2. Verfahren nach Anspruch 1, dadurch gekennzeichnet, daß das Durchmessen und ggf. das Einstellen jedes Fahrwerkes durchgeführt wird, die Größe und Richtung der in der axialen Abstützung der Rollen unterhalb der gelenkten Räder auftretenden Stützkräfte gemessen werden und die Stützkräfte durch Verstellen der die Position der gelenkten Räder bestimmenden Elemente auf Null reduziert werden.

3. Verfahren nach Anspruch 1 oder 2, dadurch gekennzeichnet, daß jedes Rad von über mehr als zwei Achsen verfügenden Kraftfahrzeugen, insbesondere Gelenkfahrzeugen, auf je ein Rollenpaar (13-16, 33, 34) gestellt wird, das Messen und gegebenenfalls Einstellen der Position der Fahrwerke von der Vorderachse aus fortschreitend je Achse durchgeführt wird, wobei diese Operation bei Gelenkfahrzeugen bis zum Gelenk fortschreitend durchgeführt wird und hinter dem Gelenk weiter fortschreitend das Messen und gegebenenfalls Einstellen der Position der Fahrwerke je Achse in der angegebenen Weise durchgeführt werden, und daß schließlich das Kontrollieren und gegebenenfalls Einstellen der Position von gelenkten Rädern hinter dem Gelenk, und weiterhin das Einstellen des Lenkgestänges der vorderen gelenkten Räder und der gelenkten Räder hinter dem Gelenk durchgeführt werden.

4. Verfahren nach einem der Ansprüche 1 bis 3, dadurch gekennzeichnet, daß das Lenkrad des auf die Rollen gestellten Kraftfahrzeuges solange gedreht wird, bis die Stützkraft in der axialen Abstützung der Rollen unterhalb der gelenkten Fahrwerke von Null abweicht, und dann die Winkelstellung des Lenkrades gemessen wird.

5. Verfahren nach einem der Ansprüche 1 bis 4, dadurch gekennzeichnet, daß der Winkel zwischen der als Basis der Position des Bolzenstiftes des Fahrwerkes dienenden horizontalen oder vertikalen Ebene und der Horizontalen bestehende Winkel und gegebenenfalls der Nachlaufwinkel des Fahrwerkes gemessen werden, wobei der vorangehend erwähnte Winkel gegenüber der Horizontalen auf einem Wert von 0° bzw. 90° gehalten wird.

6. Verfahren nach Anspruch 1, dadurch gekennzeichnet, daß die Räder des Kraftfahrzeuges auf derartige Rollenpaare gestellt werden, deren Achsen senkrecht zur Längsachse des in idealer Lage befindlichen Kraftfahrzeuges sind, daß die Position des Halbierungspunktes der Spurbreite der Räder relativ zu der Längsachse des Kraftfahrzeuges bestimmt und gegebenenfalls der zwischen ihnen bestehende Unterschied durch Verstellen der die Fahrwerke aufhängenden verstellbaren Elemente beseitigt wird, und daß die auf die Rollenpaare in Achsenrichtung und dazu senkrechter Richtung einwirkenden Kräfte gemessen und gegebenenfalls diese Kräfte durch Verstellen der die Fahrwerke aufhängendes verstellbaren Elemente beseitigt werden.

7. Verfahren nach einem der Ansprüche 1 bis 6, dadurch gekennzeichnet, daß Abmessungs- und Toleranzdaten bzgl. der Fahrwerke verschiedener Kraftfahrzeuge in einem Computer gespeichert werden, daß die gemessenen Daten mit Hilfe des Computers mit den gespeicherten Daten des gegebenen Kraftfahrzeuges verglichen werden, und daß die Fahrwerke mit Hilfe des Computers bewertet und gegebenenfalls das nötige Maß der Verstellung der einstellbaren Elemente bestimmt werden.

8. Einrichtung zum Kontrollieren der Position der Fahrwerke, insbesondere mittels Schwenkarm (Panhard-Stange) aufgehängter Fahrwerke, von Kraftfahrzeugen relativ zur Kraftfahrzeugkarosserie und zum Kontrollieren der Einstellung der gelenkten Räder, dadurch gekennzeichnet, daß mindestens so viele aus Rollen gleichen Durchmessers bestehende Rollenpaare (13-16) angeordnet sind, wie das gegebene Kraftfahrzeug zu kontrollieren Räder hat, wobei die Achse jeder der Rollen in horizontaler Ebene und senkrecht zur idealen Längsachse des zu kontrollierenden Kraftfahrzeuges ist, jeweils die rechts- und linksseitigen Rollen achsgleich angeordnet sind, und im Rollenpaar (13-16) der Abstand zwischen den Rollen kleiner ist als der Durchmesser des zu kontrollierenden Rades und die Rollenpaare in Schemeln (17, 18, 22, 23) gelagert sind, wobei die Schemel (17, 18, 22, 23) mit einer eine freie Bewegung sicherstellenden Abstützung an einem Maschinenbett (12) angeordnet sind, daß von jedem Rollenpaar mindestens die eine Rolle mit je einem mit gleicher Drehzahl betätigbaren Antrieb (32) in angetriebener Verbindung steht, daß die die vorderen Fahrwerke tragenden Schemel (17, 18) und gegebenenfalls auch die anderen Schemel in Richtung parallel zu der Achse der Rollen und gegebenenfalls dazu senkrecht am Maschinenbett abgestützt sind, daß zwischen der Abstützung und dem Schemel auf Krafteinwirkung Signale erzeugende Elemente (30) angeordnet sind, daß in der Achslinie der Fahrwerke die Räder von innen oder außen berührende Stützrollen (27, 28, 31) angeordnet sind und die Stützrollen (27, 28, 31) am Maschinenbett (12) in Querrichtung abgestützt sind, wobei in dieser Abstützung ein auf Krafteinwirkung Signale erzeugendes Element mit je einem Anzeigegerät und/oder einem Computer verbunden sind.

9. Einrichtung nach Anspruch 8, dadurch gekennzeichnet, daß die Schemel (17, 18, 22, 23) mittels nur auf Zug belastbarer Elemente am Maschinenbett (12) aufgehängt sind.

10. Einrichtung nach Ansprüche 8 oder 9, dadurch gekennzeichnet, daß die die vorderen Fahrwerke tragenden Schemel (17, 18) zwischen zur Längsachse senkrechten quergerichteten Führungen (20, 21) nur zur quergerichteten Bewegung fähig sind und daß von die anderen Fahrwerke abstützenden Schemeln (22, 23, 33, 34) die zur gleichen Kraftfahrzeugachse gehörenden Schemel aneinander befestigt sind oder gesondert zur Bewegung zwischen quergerichteten Führungen (36, 37) fähig sind und weiterhin zur längsgerichteten Bewegung zwischen längsgerichteten Führungen (25, 26, 37) fähig sind.

## Claims

1. Method for controlling and, if necessary, adjusting the position of the chassis, in paricular of chassis which are suspended by a swinging arm (Panhard rod), of motor cars with respect to the motor car body, characterised in that each wheel of the motor car is simultaneously put on a respective pair of rollers (13-16) whose axles are perpendicular to the longitudinal axis of the car, which is in an ideal position, wherein the righthand side and lefthand side rollers are coaxial, in that at least one roller of each pair of rollers is turned with the help of an external drive (32), and at least the one roller of said pair of rollers (13-16) and the motor car are supported laterally at at least two points preferybly in the direction of the axis of the chassis, in that the size and the direction of the support forces, which occur in the axial support of the rollers and/or in the lateral support of the motor car, are measured, and, if necessary, the support forces are reduced to zero by adjusting the adjustable elements (7-11), which suspend the chassis, in that the angle between the longitudinal axis of the motor car and the axles of the rollers is measured, and the position of the mid-point of the gauge of the wheels with respect to the longitudinal axis of the motor car is determinded, and in that a difference, which possibles exists between the longitudinal axis of the motor car and the mid-point of the gauge of the wheels, is removed, and the angle between the longitudinal axis of the motor car and the axles of the rollers is adjusted to $90^\circ$, if this angle is different from $90^\circ$.

2.   Method according to claim 1, characterised in that the measurement and, if necessary, the adjustment of each chassis is carried out, that the size and the direction of the support forces, which occur in the axial support of the rollers underneath the steered wheels, are measured, and that the support forces are reduced to zero by adjusting the elements which determine the position of the steered wheels.

3.   Method according to claim 1 or 2, characterised in that each wheel of motor cars having more than two axles, in particular of articulated motor cars, is put on a respective pair of rollers (13-16, 33, 34), that the measurement and, if necessary, the adjustment of the position of the chassis are carried out progressively for each axle starting with the front axle, this operation being carried out progressively up to the articulation of articulated motor cars and the measurement and, if necessary, the adjustment of the chassis for each axle are continued to be carried out in the afore mentioned manner behind the articulation of articulated motor cars, and that finally the controlling and, if necessary, the adjustment of steered wheels behind the articulation and furthermore the adjustment of the steering linkage of the steered front wheels and the steered wheels behind the articulation are carried our.

4.   Method according to claims 1 to 3, characterised in that the steering wheel of the motor car which is put on the rollers is turned until the support force in the axial support of the roller underneath the steered chassis differs from zero, and that then the angular position of the steering wheel is measured.

5.   Method according to claims 1 to 4, characterized in that the angle between the horizontal or vertical plane, which serves as the base of the position of the bolt of the chassis, and the horizontal line, and, if necessary, the steering error angle are measured, wherein the first mentioned angle is kept at a value of $0^\circ$ or $90^\circ$, respectively with respect to the horizontal line.

6.   Method according to claim 1, characterised in that the wheels of the motor car are put on such pairs of rollers, whose axles are perpendicular to the longitudinal axis of the car, which is in an ideal position, that the position of the mid-point of the wheels with respect to the longitudinal axis of the motor car is determinded, that the difference posssibly existing between them is removed by adjusting the adjustable elements which suspend the chassis, and that the forces acting on the pairs of rollers in the direction of the axles and in the direction perpendicular to it are measured, and these forces, if necessary, are removed by adjusting the adjustable elements which suspend the chassis.

7.   Method according to claims 1 to 6, characterized in that the data of the measures and the permissible variations of the chassis of different motor cars are stored in a computer, that with the help of the computer the measured data are compared with the stored data of the respective vehicle type, and that the chassis are valued with the help of the computer and, if necessary, the necessary measure of the adjustment of the adjustable elemtents are determined.

8.   Device for controlling the position of any chassis, in particular of chassis which are suspended by a swinging arm (Panhard rod), of motor cars with respect ot the motor car body, and for controlling the adjutment of the steered wheels, characeterized in that at least as many pairs of rollers (13-16) comprising rollers having the same diameter as the given motor car has wheels to be controlled, are arranged, wherein the axle of each of the rollers is in an horizontal plane and perpendicular to the ideal longitudinal axis of the motor car to be controlled, that the righthand side and lefthand side roller are arranged coaxially, and that in a pair of rollers (13-16) the distance between the rollers is smaller than the diameter of the wheel to be controlled, and that the pairs of rollers are running in bearings (17, 18, 22, 23), wherein the bearings (17, 18, 22, 23) are arranged with a support guarantying free movement at an engine bed (12), that of each pair of rollers at least the one roller is connected in a driven connection with a respective drive (32), which is operable with the same number of revolutions, that the bearings (17, 18) supporting the front chassis and, if necessary, also the other bearings are supported at the engine bed in the direction parllel to the axle of the rollers and, if necessary, in the direction perpendicular to it, that elements (30) are arranged between the support and the bearing, which produce signals under the effect of forces, that in the direction of the axis of the chassis there are arranged support rollers (27, 28, 31), which touch the wheels from the inside or the outside and the support rollers (27, 28, 31) are supported at the engine bed (12) in transverse direction, wherein in this support an element, which produces signals under the effect of forces, is connected with a display device and/or with a computer.

9. Device according to claim 8, characterized in that the bearings (17, 18, 22, 23) are suspended at the engine bed (12) by elements which bear only tensile load.

10. Device according to claims 8 or 9, characterized in that the bearings (17, 18) supporting the front chassis are only capable of motion in the transverse direction between guidances (20, 21) which are in the transverse direction perpendicular to the longitudinal axis, and that of the bearings (22, 23, 33, 34) supporting the other chassis these bearings which belong to the same car axle are connected to each other, or are seperately capable of motion between transversely directed guidances (36, 37), and, furthermore, are capable of longitudinally directed motions between longitudinally directed guidances (25, 26, 37).

**Revendications**

1. Procédé de contrôle et de réglage éventuel de la position des trains de roues des véhicules, en particulier des trains de roues de véhicules automobiles suspendus par des bras oscillants (barres Panhard) par rapport à la carrosserie du véhicule, caractérisé en ce que chaque roue du véhicule automobile est posée simultanément sur une paire de rouleaux (13 à 16) dont les axes sont perpendiculaires à l'axe longitudinal du véhicule automobile se trouvant en position idéale, les rouleaux de droite et de gauche étant coaxiaux, en ce que de chaque paire de rouleaux au moins un rouleau est mis en rotation à l'aide d'un dispositif extérieur d'actionnement (32) et au moins un rouleau de la paire (13 à 16) et le véhicule automobile viennent en appui latéral à au moins deux endroits situés de préférence sur l'axe des trains de roues (27, 28, 31), en ce que l'on mesure la grandeur et la direction des forces d'appui apparaissant dans l'organe d'appui axial des rouleaux et/ou dans l'organe d'appui latéral du véhicule automobile et en ce que l'on annule le cas échéant les forces d'appui des organes réglables (7 à 11) de suspension les trains de roues, en ce que l'on mesure l'angle compris entre l'axe longitudinal du véhicule automobile et les axes des rouleaux et que l'on détermine la position du point milieu de la largeur de voie des roues relativement à l'axe longitudinal du véhicule automobile et en ce que l'on évite en ajustant les organes réglables (7 à 11) de suspension des trains de roues, un écart éventuel se manifestant entre l'axe longitudinal du véhicule automobile et le point milieu de la largeur de voie des roues et que l'on règle à 90° l'angle compris entre l'axe longitudinal du véhicule et les axes des rouleaux, dans le cas où cet angle diffère de 90°.

2. Procédé selon la revendication 1, caractérisé en ce que l'on exécute la mesure et le cas échéant le réglage de chaque train de roues, que l'on mesure la grandeur et la direction des forces d'appui produites par l'appui axial des rouleaux sous les roues directrices et que l'on annule les forces d'appui en déplaçant les éléments déterminant la position des roues directrices.

3. Procédé selon la revendication 1 ou la revendication 2, caractérisé en ce qu'on dépose sur chaque paire de rouleaux (13 à 16; 33, 34) chaque roue des véhicules disposant automobiles de plus de deux essieux, en particulier des véhicules articulés, qu'on mesure et règle le cas échéant la position des trains de roue de l'essieu avant, progressivement sur chaque essieu, tandis qu'on exécute progressivement cette opération pour les véhicules articulés jusqu'à l'articulation et l'on effectue ensuite après l'articulation progressivement la mesure et, le cas échéant, le réglage de la position des trains de roue, pour chaque essieu de la manière indiquée et en ce que l'on effectue finalement le contrôle et le cas échéant le réglage de la position des roues directrices, derrière l'articulation de direction des roues directrices avant et des roues directrices situées après l'articulation.

4. Procédé selon l'une quelconque des revendications 1 à 3, caractérisé en ce que l'on tourne le volant de direction du véhicule reposant sur les rouleaux jusqu'à ce que la force d'appui, à l'appui axial des rouleaux, en dessous des trains de roues directeurs diffère de zéro, et en ce que l'on mesure ensuite la position angulaire du volant de direction.

5. Procédé selon l'une quelconque des revendications 1 à 4, caractérisé en ce que l'on mesure l'angle compris entre les plans horizontaux ou verticaux servant de base à la position de l'axe de pivot du train de roues et l'angle des horizontales ainsi qu'éventuellement l'angle de chasse du train de roues, l'angle cité en premier étant maintenu par rapport aux horizontales à une valeur de 0° ou respectivement de 90°.

6. Procédé selon la revendication 1, caractérisé en ce que l'on dispose les roues du véhicule automobile sur des rouleaux tels que leurs axes soient perpendiculaires à l'axe longitudinal du véhicule automobile se trouvant en position idéale, en ce qu'on détermine la position du point milieu de la largeur de voie des roues par rapport à l'axe longitudinal du véhicule automobile, et l'on élimine le cas échéant l'écart existant entre eux, en déplaçant les éléments réglables de suspension des trains de roues, en ce qu'on mesure les forces exercées sur les paires de rouleaux dans la direction axiale et dans la direction perpendiculaire et l'on supprime le cas échéant ces forces en déplaçant les éléments réglables de la suspension des trains de roues.

7. Procédé selon l'une quelconque des revendications 1 à 6, caractérisé en ce que l'on mémorise dans un ordinateur les données de mesure et de tolérance relatives aux trains de roues de différents véhicules automobiles, on compare à l'aide de l'ordinateur les données des mesures avec celles mises en mémoire du véhicule automobile en question et l'on traite à l'ordinateur les trains de roues et détermine le cas échéant la valeur du réglage à effectuer sur les organes réglables.

8. Installation de contrôle de la position des trains de roues, en particulier suspendus par des bras oscillants (barres Panhard), de véhicules automobiles par rapport à la carrosserie du véhicule et pour contrôler le réglage des roues directrices, caractérisé en ce que l'on dispose d'au moins autant de paires de rouleaux (13 à 16) de même diamètre, que le véhicule automobile en question a de roues à contrôler, l'axe de chacun des rouleaux étant dans le plan horizontal et perpendiculaire à l'axe longitudinal idéal du véhicule automobile à contrôler, les rouleaux de gauche et de droite étant chaque fois coaxiaux, la distance entre les rouleaux dans la paire de rouleaux (13 à 16) étant inférieure au diamètre de la roue à contrôler et les paires de rouleaux étant montés dans des sellettes (17, 18, 22, 23), cas supports (17, 18, 22, 23) étant disposées sur un banc de machine (12) selon un appui permettant un libre déplacement, en ce qu'au moins un rouleau de chaque paire est relié par une liaison cinématique à un organe d'entrainement (32) pouvant être entrainé à la même vitesse angulaire, en ce que les sellettes (17, 18) des trains de roues avant et le cas échéant les autres sellettes, sont en appui sur le banc de la machine selon une direction parallèle à l'axe des rouleaux et le cas échéant perpendiculaire à celle-ci, en ce qu'entre l'appui et la sellette sont prévus des éléments (30) émetteurs de signaux d'effort, en ce qu'on dispose des rouleaux d'appui (27, 28, 31) au contact des roues extérieures ou intérieures selon l'axe des trains de roues, et en ce que les rouleaux d'appui (27, 28, 31) sont en appui en direction transversale sur le banc de la machine (12), cet appui assurant la liaison d'un élément émetteur de signaux d'effort dans chaque cas à un appareil de signalisation et/ou un ordinateur.

9. Installation selon la revendication 8, caractérisée en ce que les sellettes (17, 18, 22, 23) sont suspendues au banc de la machine (12) au moyen d'éléments ne travaillant qu'à la traction.

10. Installation selon les revendications 8 ou 9, caractérisée en ce que les sellettes (17, 18) supportant les trains de roues avant ne peuvent effectuer qu'un déplacement transversal entre les glissières transversales (20, 21), perpendiculaires à l'axe longitudinal et en ce que parmi les sellettes (22, 23, 33, 34) supportant les autres trains de roues, celles appartenant au même axe du véhicule automobile sont fixées les unes aux autres ou bien sont aptes isolément à se déplacer entre les glissières transversales (36, 37) et en outre, à se déplacer longitudinalement entre les glissières longitudinales (25, 26, 37).

Fig 1.

Fig 2.

Fig. 3.

Fig. 4.

EP 0 292 855 B1

Fig. 5.

15